# EUROPEAN PATENT SPECIFICATION

(11) **EP 2 301 648 B1**
(45) Date of publication and mention of the grant of the patent: **02.04.2014**
(21) Application number: 09171552.4
(22) Date of filing: 29.09.2009
(51) Int. Cl.: B01D 53/86, F23J 15/02

(54) **Method of controlling the concentration of a reducing agent in a dust material of a processing unit**
Verfahren zum Steuern der Konzentration eines Reduktionsmittels in einem Staubmaterial einer Verarbeitungseinheit
Procédé de contrôle de la concentration d'un agent réducteur dans un matériau de poussière d'une unité de traitement

(43) Date of publication of application: 30.03.2011
(73) Proprietor: Alstom Technology Ltd, 5400 Baden (CH)
(72) Inventor: Larsson, Mikael, 431 44 Mölndal (SE)

(56) References cited:
- EP-A1- 0 292 012
- DE-A1- 3 032 927
- DE-A1- 3 526 756
- US-A- 5 424 044
- US-A1- 2003 205 173

## Description

### Field of the Invention

The present invention relates to a method of controlling the concentration of a reducing agent in a dust material being formed as a by-product in a process plant, the process plant comprising a processing unit generating a process gas containing dust particles, a dust removal device for removing at least a portion of the dust particles from the process gas to form a removed dust, and a reducing agent supply device being operative for supplying a reducing agent upstream of the dust removal device, as seen with respect to the flow direction of the process gas.

The present invention further relates to a dust handling system for controlling the concentration of a reducing agent in a dust material being formed as a by-product in a process plant of the above referenced type.

### Background of the Invention

In the combustion of a fuel, such as coal, oil, peat, waste, etc., in a combustion plant, such as a power plant, a hot process gas is generated, such process gas containing, among other components, dust particles, sometimes referred to as fly ash. The dust particles are often removed from the process gas by means of a dust removal device, such as an electrostatic precipitator, also called an ESP, or a fabric filter. The process gas may also contain nitrogen oxides. To reduce the amount of nitrogen oxides a reducing agent, such as ammonia or urea, is often supplied to the process gas to react with the nitrogen oxides. Often the supply of a reducing agent, such as ammonia or urea, is made upstream of the dust removal device, and at least a portion of the excess reducing agent supplied for the purpose of reducing the content of nitrogen oxides tends to end up in the fly ash collected in the dust removal device in the form of a contaminant, making recycling and reuse of the fly ash, and even disposal of the fly ash, more difficult.

US 6,290,066 discloses a process in which an ammonia contaminated fly ash is mixed with water to separate it in various fractions, such as a carbon fraction and a fly ash fraction. The fly ash fraction is then filtered to remove the water, and the filter cake formed thereby is washed with water to remove ammonia. The filter cake may then be dried.

Cleaning an ammonia contaminated fly ash in accordance with US 6,290,066 may be efficient in removing ammonia from the fly ash, but is highly expensive when taking investment and operating costs into account.

### Summary of the Invention

An object of the present invention is to provide a method of controlling the concentration of a reducing agent in a dust material being formed as a by-product in a process plant, said method being more efficient than the method of the prior art.

This object is achieved by means of a method of controlling the concentration of a reducing agent in a dust material being formed as a by-product in a process plant, said process plant comprising a processing unit generating a process gas containing dust particles, a dust removal device for removing at least a portion of the dust particles from the process gas to form a removed dust, and a reducing agent supply device being operative for supplying a reducing agent upstream of the dust removal device, as seen with respect to the flow direction of the process gas, the method comprising the steps of
estimating the concentration of the reducing agent in the removed dust formed in the dust removal device,
determining if the removed dust fulfils, with respect to its estimated concentration of the reducing agent, a quality criterion,
forwarding the removed dust, if the removed dust fulfils the quality criterion, to a first dust storage device to form a first dust material fulfilling the quality criterion, and
forwarding the removed dust, if the removed dust fails to fulfil the quality criterion, to a second dust storage device to form a second dust material failing to fulfil the quality criterion.

An advantage of this method is that the quality of the dust material being formed as a by-product in the process plant can be controlled in a simple, yet effective manner, without necessarily having to actually clean the removed dust from the reducing agent.

According to one embodiment said step of estimating the concentration of the reducing agent in the removed dust formed in the dust removal device comprises measuring the amount of reducing agent supplied upstream of the dust removal device by means of the reducing agent supply device and utilizing a correlation between the amount of reducing agent supplied by means of the reducing agent supply device and the concentration of reducing agent in the removed dust formed in the dust removal device. An advantage of this embodiment is that it is possible to estimate, in a cost efficient manner, which concentration of the reducing agent that can be expected in the removed dust, such that the removed dust can be directed to the correct dust storage device.

According to one embodiment said step of estimating the concentration of the reducing agent in the removed dust formed in the dust removal device comprises measuring, directly or indirectly, the concentration of the reducing agent in the removed dust formed in the dust removal device. An advantage of this embodiment is that a precise estimation of the concentration of the reducing agent in the removed dust can be ensured, hence providing for a very accurate control of to which dust storage device the removed dust is to be forwarded.

According to one embodiment the dust removal device is an electrostatic precipitator having at least two fields in series, as seen with respect to the flow direction of the process gas, each of the at least two fields being provided with at least one separate hopper collecting the removed dust of the respective field, said step of estimating the concentration of the reducing agent in the removed dust formed in the dust removal device comprising estimating individually for each field the concentration of the reducing agent in the removed dust. An advantage of this embodiment is that it becomes possible to obtain information about the situation in the individual fields of the electrostatic precipitator, such that the individual situation in the respective field can form a basis for a decision on the further handling of the removed dust.

Preferably, said method further comprises determining, individually for each field, if the removed dust of each field fulfils, with respect to its estimated concentration of the reducing agent, the quality criterion, forwarding the removed dust from each individual field, if the removed dust fulfils the quality criterion, to the first dust storage device to form the first dust material fulfilling the quality criterion, and forwarding the removed dust from each individual field, if the removed dust fails to fulfil the quality criterion, to the second dust storage device to form the second dust material failing to fulfil the quality criterion. An advantage of this embodiment is that it becomes possible to obtain the maximum amount of the high quality dust material in the first dust storage device, without risking contamination by removed dust from a field in which the concentration of the reducing agent in the removed dust is high.

According to one embodiment said step of determining if the removed dust fulfils, with respect to its estimated concentration of the reducing agent, a quality criterion, comprises determining if the removed dust fulfils said quality criterion, being a first quality criterion, and a further quality criterion, being a second quality criterion, the second quality criterion defining a lower quality with respect to the concentration of the reducing agent than the first quality criterion, said method further comprising forwarding the removed dust, if the removed dust fulfils the first quality criterion, to the first dust storage device to form the first dust material fulfilling the first quality criterion, forwarding the removed dust, if the removed dust fails to fulfil the first quality criterion but fulfils the second quality criterion, to the second dust storage device to form the second dust material fulfilling the second quality criterion, and forwarding the removed dust, if the removed dust fails to fulfil the second quality criterion, to a third dust storage device to form a third dust material failing to fulfil the second quality criterion. An advantage of this embodiment is that several dust material qualities can be obtained, fulfilling various demands. A further advantage is that if an amount of dust material has to be treated for actual removal of the reducing agent from such an amount of dust material, the fraction of the total amount of dust material that needs to be exposed to such a treatment is minimized.

A further object of the present invention is to provide a dust handling system which is operative for controlling the concentration of a reducing agent in a dust material being formed as a by-product in a process plant, the dust handling system being more efficient than the prior art dust handling systems.

This object is achieved by means of a dust handling system for controlling the concentration of a reducing agent in a dust material being formed as a by-product in a process plant of the above referenced type, the dust handling system comprising a control system being operative for estimating the concentration of the reducing agent in the removed dust formed in the dust removal device, and for determining if the removed dust fulfils, with respect to its estimated concentration of reducing agent, a quality criterion, and a dust transport system being operative for forwarding the removed dust, if the removed dust fulfils the quality criterion, to a first dust storage device to form a first dust material fulfilling the quality criterion, and for forwarding the removed dust, if the removed dust fails to fulfil the quality criterion, to a second dust storage device to form a second dust material failing to fulfil the quality criterion. An advantage of this dust handling system is that it makes it possible to obtain, at a low investment, operating and maintenance cost, a good control of the quality of a high quality dust material obtained as a by-product.

According to one embodiment the control system is operative for receiving a signal indicating the amount of reducing agent supplied upstream of the dust removal device by means of the reducing agent supply device and for estimating the concentration of the reducing agent in the removed dust formed in the dust removal device utilizing a correlation between the amount of reducing agent supplied by means of the reducing agent supply device and the concentration of the reducing agent in the removed dust formed in the dust removal device.

According to another embodiment the dust handling system comprises at least one measurement device being operative for measuring, directly or indirectly, the concentration of the reducing agent in the removed dust formed in the dust removal device.

According to one embodiment the dust handling system is adapted for handling dust from a dust removal device comprising at least two separate hoppers collecting the dust particles removed from the process gas and forming two separate removed dusts, the dust handling system comprising separate transport devices leading from each of the at least two separate hoppers to each of the first and second dust storage devices. An advantage of this embodiment is that the control of the concentration of the reducing agent in the dust material becomes more accurate.

Further objects and features of the present invention will be apparent from the description and the claims.

### Brief description of the Drawings

The invention will now be described in more detail with reference to the appended drawings in which:
Fig. 1 is a schematic side view of a power plant.
Fig. 2 is a schematic diagram illustrating one method of controlling the concentration of a reducing agent in a dust material.
Fig. 3 is a schematic side view of a power plant in accordance with a second embodiment.

### Description of Preferred Embodiments

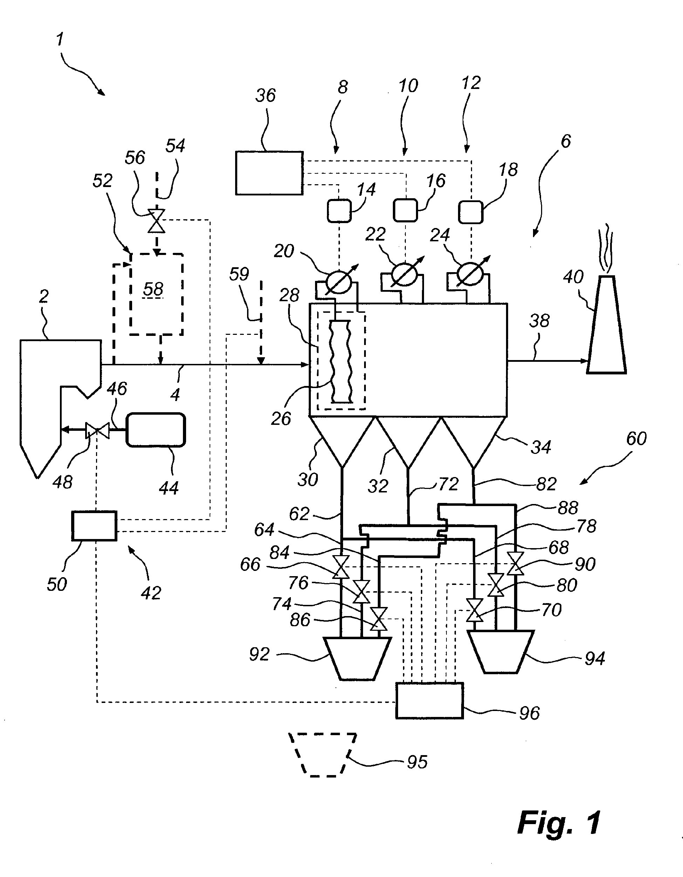

Fig. 1 is a schematic side view and illustrates a process plant in the form of a power plant 1, as seen from the side thereof. The power plant 1 comprises a processing unit in the form of a combustion unit being a coal fired boiler 2. In the coal fired boiler 2 coal is combusted in the presence of oxygen generating a hot process gas in the form of so-called flue gas that leaves the coal fired boiler 2 via a duct 4. The flue gas generated in the coal fired boiler 2 comprises dust particles, that must be removed from the flue gas before the flue gas can be emitted to the ambient air. The duct 4 conveys the flue gas to a dust removal device in the form of an electrostatic precipitator, ESP, 6 which with respect to the flow direction of the flue gas is located downstream of the boiler 2. Electrostatic precipitators are per se known from, for example, US 4,502,872.

The ESP 6 comprises what is commonly referred to as a first field 8, a second field 10, and a third field 12, arranged in series, as seen with respect to the flow direction of the flue gas. The three fields 8, 10, 12 are electrically insulated from each other. Each of the fields 8, 10, 12 is provided with a respective control device 14, 16, 18 controlling the function of a respective rectifier 20, 22, 24.

Each of the fields 8, 10, 12 comprises several discharge electrodes and several collecting electrode plates, in a similar manner as illustrated in more detail in US 4,502,872, although Fig. 1, in the interest of maintaining clarity of illustration therein, only illustrates one discharge electrode 26 and one collecting electrode plate 28 of the first field 8. In Fig. 1 it is schematically illustrated how the rectifier 20 applies power, i.e., voltage and current, between the discharge electrodes 26 and the collecting electrode plates 28 of the first field 8 to charge the dust particles that are present in the flue gas. After being so charged, the dust particles are collected on the collecting electrode plates 28. A similar process occurs in the second and third fields 10, 12. The collected dust particles are removed from the collecting electrode plates 28 by means of so-called rapping devices, not shown in Fig. 1, and are finally collected in hoppers 30, 32, 34, those hoppers thus being operative for containing what could be referred to as removed dust. The rectifiers 14, 16, 18 are individually controlled by means of an ESP control unit 36. Typically, and merely as an example, about 80-95 % by weight of the total amount of dust particles of the flue gas may be collected already in the first field 8, about 4-18 % by weight of the total amount of dust particles of the flue gas may be collected in the second field 10, and 0,1-2 % by weight of the total amount of dust particles of the flue gas may be collected in the third field 12.

A duct 38 is provided that is designed to be operative for forwarding flue gas, from which at least part of the dust particles have been removed, from the ESP 6 to a stack 40. The stack 40 releases the flue gas to the atmosphere.

The flue gas generated in the boiler 2 also contains nitrogen oxides, also referred to as NOx. In order to remove such nitrogen oxides a so called Selective Non Catalytic Reduction (SNCR) system 42 has been arranged in conjunction with the boiler 2. The SNCR system 42 comprises a tank 44 comprising a reducing agent, such as urea or ammonia, a supply pipe 46 for supplying the reducing agent to the boiler 2, a control valve 48 controlling the supply of reducing agent to the boiler 2, and an SNCR control system 50 controlling the control valve 48. The principle of SNCR is per se known, as disclosed in, for example, US 6,146,605, and involves supplying the reducing agent to a high temperature zone in the boiler 2 in which the supplied reducing agent reacts with the nitrogen oxides to chemically reduce such nitrogen oxides to harmless nitrogen gas.

Optionally the power plant 1 may also comprise, either in addition to the SNCR system 42, or as alternative to the SNCR system 42, a Selective Catalytic Reduction (SCR) system 52, illustrated by dashed lines in Fig. 1. SCR systems are per se known for reducing nitrogen oxides, as is illustrated in, for example, US 6,146,605. The SCR system 52 comprises a supply pipe 54 for supplying a reducing agent, such as urea or ammonia, from a tank, not shown in Fig 1., and a control valve 56 controlling the supply of the reducing agent to an SCR reactor 58. The reactor 58 is provided with a catalytic material, such as vanadium pentoxide. At least a part of the flue gas leaving the boiler 2 is, in this optional embodiment, forwarded to the SCR reactor 58. In the reactor 58 the flue gas is contacted with the reducing agent, supplied via the pipe 54, and the nitrogen oxides react, under the influence of the catalytic material, with the reducing agent to form harmless nitrogen gas. The flue gas then leaves the reactor 58 and is forwarded to the ESP 6 via the duct 4.

The control system 50 controlling the supply of reducing agent to the SNCR system 42 may also control the control valve 56 of the SCR system 52 such that a suitable amount of the reducing agent is supplied to the SCR system 52 via the pipe 54. The supply of the reducing agent to the SNCR system 42 and/or to the SCR system 52 may be controlled in a per se known manner in view of, e.g., the load on the boiler 2, the concentration of nitrogen oxides as measured in the stack 40, etc.

As a yet further option, and optionally in combination with the SNCR system 42 and/or the SCR system 52, the power plant 1 may be provided with a so-called ammonia conditioning system 59, illustrated with dashed lines in Fig 1. The ammonia conditioning system 59, which is per se known, comprises a supply pipe supplying ammonia, NH₃, from an ammonia supply device, not illustrated in Fig 1 for reasons of maintaining clarity of illustration, to the duct 4 just upstream of the ESP 6. The purpose of the ammonia conditioning system 59 is to reduce the resistivity of dust particles of the flue gas, making the ESP 6 more efficient in removing the dust particles from the flue gas. The supply of ammonia from the ammonia conditioning system 59 may be controlled by means of the control system 50.

The power plant 1 is provided with a dust handling system 60 comprising means for controlling the further handling of the dust particles collected in the ESP 6. Hence, the hopper 30 of the first field 8 is provided with a common disposal pipe 62, which is divided into a first disposal pipe 64 being provided with a valve 66, and a second disposal pipe 68, being provided with a valve 70. In a similar manner the hopper 32 of the second field 10 is provided with a common disposal pipe 72, a first disposal pipe 74 being controlled by means of a valve 76, and a second disposal pipe 78 being controlled by means of a valve 80. Furthermore, the hopper 34 of the third field 12 is provided with a common disposal pipe 82, a first disposal pipe 84 being controlled by means of a valve 86, and a second disposal pipe 88 being controlled by means of a valve 90.

Each of the respective first disposal pipes 64, 74, 84 is operative for emptying removed dust from their respective hopper 30, 32, 34 and into a first collecting bin 92. Each of the respective second disposal pipes 68, 78, 88 is operative for emptying removed dust from their respective hopper 30, 32, 34 and into a second collecting bin 94. The first collecting bin 92 is operative for collecting dust material of a first quality, such as cement quality, and the second collecting bin 94 is operative for collecting dust material of a second quality, such as landfill quality, the second quality being different from the first quality.

In addition to the above described pipes and valves that are connected to the hoppers 30, 32, 34 and that form the dust transport system of the dust handling system 60, the dust handling system 60 further comprises a dust handling control system 96 being operative for controlling the valves 66, 70, 76,80,86,90.

The dust handling control system 96 is operative for receiving a signal which is indicative of the amount of the reducing agent that has been supplied to the SNCR system 42, and/or to the SCR system 52 and/or to the ammonia conditioning system 59. Such a signal may, preferably, be obtained from the control system 50 which controls the supply of the reducing agent to the SNCR system 42, and/or to the SCR system 52, and/or to the ammonia conditioning system 59. Such supply of the reducing agent is, hence, made upstream of the electrostatic precipitator 6, as seen with respect to the flow direction of the flue gas. Based on the signal received from the control system 50 the dust handling control system 96 calculates the expected concentration of the reducing agent in the dust particles collected in the three fields 8, 10, 12. Such calculation may be performed based on practical measurements and/or theoretical calculations of the correlation between the amount of reducing agent supplied to the SNCR system 42, and/or to the SCR system 52 and/or to the ammonia conditioning system 59, and the concentration of the reducing agent in the removed dust formed in the hoppers 30, 32, 34 of the respective fields 8, 10,12. Depending on the calculated concentration of the reducing agent in the removed dust formed in the three fields 8, 10, 12 the dust handling control system 96 automatically controls the valves 66, 70, 76, 80, 86, 90 in such a manner that removed dust having a concentration of the reducing agent fulfilling the requirements of the first quality, to be collected in the first collecting bin 92, is directed to that bin, while dust that fails to fulfil the requirements of the first quality is directed to the second collecting bin 94.

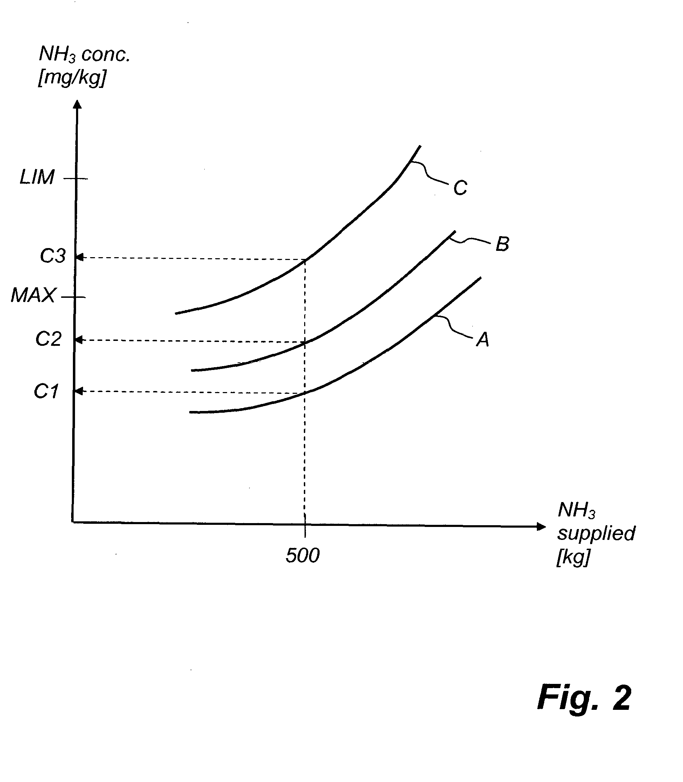

Fig. 2 illustrates, by means of a diagram, one example of how the dust handling control system 96 could control the forwarding of the removed dust from the hoppers 30, 32, 34 to the two collecting bins 92, 94. The x-axis of the diagram of Fig. 2 illustrates the total amount of the reducing agent, in this example ammonia, NH₃, that has been supplied to the SNCR system 42 the last, e.g., one hour. The y-axis of the diagram of Fig. 2 indicates the corresponding concentration, in mg/kg, of ammonia in the removed dust.

Based on measurements performed three curves A, B and C have been obtained, as illustrated in Fig. 2. Curve A depicts the correlation between the ammonia supplied to the SNCR system 42 and the measured concentration of ammonia in the removed dust in the hopper 30 of the first field 8. Similarly, the curve B depicts the correlation between the ammonia supplied to the SNCR system 42 and the measured concentration of ammonia in the removed dust in the hopper 32 of the second field 10, and the curve C depicts the correlation between the ammonia supplied to the SNCR system 42 and the measured concentration of ammonia in the removed dust in the hopper 34 of the third field 12. As can be seen from a reference to Fig. 2, a certain amount of ammonia supplied to the SNCR system 42 results in a higher concentration of ammonia in the removed dust of the last field 12 than in the removed dust of the first and second fields 8, 10. Without being limited by any such statement, it is believed that this effect is due to the fact that the reducing agent, in this case ammonia, is more easily collected on the smaller dust particles, which are to a higher degree collected in the last field 12 of the electrostatic precipitator 6. The difference between the curves A and B may also be explained by this effect, since a larger fraction of small particles are collected in the second field 10, compared to the first field 8.

Based on requirements from, e.g., the cement industry, there is a quality criterion, such as a maximum allowable concentration of ammonia in the removed dust for such removed dust to be allowed for use in, e.g., the manufacturing of cement. In Fig. 2 this quality criterion, i.e., the maximum ammonia concentration, has been marked by means of a concentration MAX. Only removed dust with a concentration of ammonia which is lower than this concentration MAX fulfils the quality criterion and would be allowed for cement production.

In one example, referring to Fig. 2, the dust handling control system 96 receives a signal from the SNCR control system 50 that during the last hour 500 kg of ammonia has been supplied to the SNCR system 42. Based on this information the dust handling control system 96 may find, based on curve A of Fig. 2, that the hopper 30 of the first field 8 contains removed dust having an ammonia concentration C1. The dust handling control system 96 compares C1 to MAX, whereby it is established that the ammonia concentration in the removed dust is sufficiently low for cement quality purposes. The control system 96 then orders valve 66 to open, and valve 70 to close, such that the removed dust collected in the hopper 30 will be forwarded to the first collecting bin 92 being adapted for collecting dust material of cement quality. In a similar manner, the control system 96 finds, based on curve B of Fig. 2, that the removed dust of the hopper 32 has a concentration C2, which is also lower than MAX, and, hence, the control system 96 orders the valve 76 to open, and the valve 80 to close, such that also the removed dust of the hopper 32 will be forwarded to the first collecting bin 92. Finally, the control system 96 finds, based on curve C of Fig. 2, that the removed dust of the hopper 34 has a concentration C3, which is higher than MAX. Hence, the removed dust of the hopper 34 is not acceptable for cement quality use. The control system 96 thus orders the valve 86 to close, and the valve 90 to open, such that the removed dust of the hopper 34 will be forwarded to the second collecting bin 94, containing dust of lower quality, which will be sent for, e.g., land filling. By means of the above described method, dust material having cement quality is formed in the first collecting bin 92, separate from the dust material of lower quality, the dust material in the first collecting bin 92 thereby not being contaminated by the lower quality dust material formed in the second collecting bin 94.

Above it has been described that the signal received from the control system 50 contains information about the amount of ammonia supplied to the SNCR system 42 during the last hour. As described above, the first field 8 collects much more dust, in tonnes/hour, than the second field 10, which, in its turn, collects much more dust than the third field 12. For that reason the time elapsed between the collection of dust particles in a particular field, and the emptying of the removed dust from the respective hopper into the relevant collecting bin may vary a lot between the three fields. Hence, if the amount of ammonia supplied to the SNCR system 42 varies considerably it may be preferable to control the emptying of the three hoppers 30, 32, 34 based on different diagrams and different ranges for the ammonia amount. Hence, for the first field 8, the hopper 30 of which may be emptied once every hour, it might be relevant for the control system 96 to base its decision on first or second collecting bin 92, 94, on a signal from the control system 50 indicating the amount of ammonia supplied to the SNCR system 42 during the last hour. Furthermore, for the second field 10, the hopper 32 of which may be emptied once every four hours, it might be relevant for the control system 96 to base its decision on first or second collecting bin 92, 94 on a signal from the control system 50 indicating the amount of ammonia supplied to the SNCR system 42 during the last four hours, and, finally, for the third field 12, the hopper 34 of which may be emptied once every day, it might be relevant for the control system 96 to base its decision on first or second collecting bin 92, 94, on a signal from the control system 50 indicating the amount of ammonia supplied to the SNCR system 42 during the last 24 hours. It will be appreciated that the respective hoppers 30, 32, 34 may be emptied in a batch-wise manner, as described above, but that it is also possible to empty the respective hoppers 30, 32, 34 in a more or less continuous manner, resulting in a continuous flow of removed dust to the collecting bins 92, 94.

Above it has been described that the curves A, B and C illustrating the correlation between the amount of reducing agent supplied to the process gas and the corresponding concentration of reducing agent in the removed dust are based on measurements. It will be appreciated that such curves, or corresponding mathematical functions, may also, as alternative to, or in combination with, measurements, be based on a mathematical model predicting the concentration of reducing agent on dust particles taking suitable operating parameters into account.

Above it has been described, with reference to Fig. 2, that the concentration of the reducing agent, such as ammonia, in the removed dust is estimated based on a correlation between the amount of reducing agent supplied to the process gas and the corresponding concentration of reducing agent in the removed dust. The estimation of the concentration of reducing agent in the removed dust may, as alternative, be based on other operating parameters as alternative to, or in combination with, the amount of reducing agent supplied upstream of the dust removal device. The dust handling control system 96 could receive the values of such other parameters from the control system 50 illustrated in Fig. 1, from a main plant control system, not illustrated in Fig. 1, controlling the operation of the entire power plant 1, from specific measurement devices, or from other sources. Examples of such other parameters include: the measured concentration of gaseous reducing agent, such as ammonia, in, e.g., the unit ppm, as measured in the process gas upstream of the electrostatic precipitator; the process gas temperature; the load on the boiler 2; the residence time of the particles in the electrostatic precipitator, as given by the actual time between cleaning sequences; the particle size; the type of fuel supplied to the boiler 2; the concentration of substances prone to react with the reducing agent, such as sulphur trioxide, SO₃, and nitrogen oxides, NOx, etc.

Above it has been described that the electrostatic precipitator 6 is provided with three fields 8,10, 12, and that the respective hoppers 30, 32, 34 are emptied into two different collecting bins 92, 94. It will be appreciated that the electrostatic precipitator may be provided with any number of fields, for example from 1 to 10 fields, each such field having one or several hoppers. Furthermore, it is also appreciated that the dust handling control system 96 could have more than two different collecting bins to choose between. For example, three collecting bins could be provided, and two quality criterion, for example the quality criterion MAX indicating the maximum concentration of ammonia in dust for use in cement production, and a further quality criterion LIM, as illustrated in Fig. 2, indicating the upper concentration of ammonia for the removed dust to be acceptable for normal land filling. The first bin 92 would then be operative for collecting dust material for cement use, the concentration of ammonia in such dust being lower than MAX, the second bin 94 would be operative for collecting dust for normal land filling purposes, the concentration of ammonia in such dust being higher than MAX but lower than LIM, and a third bin, indicated as 95 in Fig 1, would be operative for collecting dust for special treatment, such as various, and per se known, treatment processes, such as the process disclosed in US 6,290,066, for removing ammonia from the dust material, the concentration of ammonia in such dust material being higher than LIM. It will be appreciated that in such a case the dust handling system 60 would be provided with further pipes and valves, not illustrated in Fig. 1 for reasons of maintaining clarity of illustration, adapted for making it possible to forward the removed dust from each of the hoppers 30, 32, 34 also to the third bin 95.

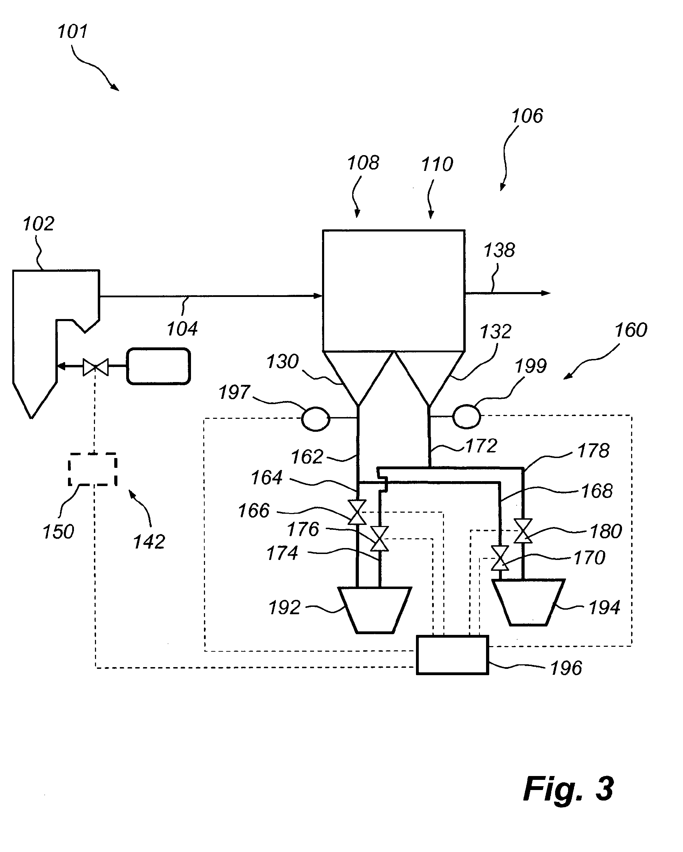

Fig. 3 illustrates a power plant 101 according to a second embodiment. The power plant 101 comprises a processing unit in the form of a coal fired boiler 102. Flue gas that leaves the coal fired boiler 102 via a duct 104 is conveyed to a filter in the form of an electrostatic precipitator, ESP, 106. The electrostatic precipitator 106 is rather similar to the electrostatic precipitator 6 described hereinbefore with reference to Fig. 1, but is illustrated, for reasons of maintaining clarity of illustration, with only a first field 108 and a second field 110. Flue gas from which dust particles have been removed leave the electrostatic precipitator 106 via a duct 138. The dust collected in the respective fields 108,110 is collected in hoppers 130, and 132.

The power plant 101 is provided with an SNCR system 142 which is of the same type as the SNCR system 42 described with reference to Fig. 1, and which is controlled by means of a control system 150. Optionally, the power plant 101 may, as alternative to, or in combination with, the SNCR system 142, comprise an SCR system and/or an ammonia conditioning system.

The power plant 101 is provided with a dust handling system 160 comprising means for controlling the further handling of the dust particles collected in the ESP 106. Hence, the hopper 130 of the first field 108 is provided with a common disposal pipe 162, which is divided into a first disposal pipe 164 being provided with a valve 166, and a second disposal pipe 168, being provided with a valve 170. In a similar manner the hopper 132 of the second field 110 is provided with a common disposal pipe 172, a first disposal pipe 174 being controlled by means of a valve 176, and a second disposal pipe 178 being controlled by means of a valve180.

Each of the respective first disposal pipes 164, 174, is operative for emptying removed dust from their respective hopper 130, 132 and into a first collecting bin 192. Each of the respective second disposal pipes 168, 178 is operative for emptying collected dust particles from their respective hopper 130, 132 and into a second collecting bin 194. The first collecting bin 192 is operative for collecting dust material of a first quality, such as cement quality, and the second collecting bin 194 is operative for collecting dust material of a second quality, such as landfill quality, the second quality being different from the first quality. The dust handling system 160 comprises a dust handling control system 196 being operative for controlling the valves 166, 170, 176, 180.

Furthermore, the dust handling system 160 comprises a first measurement device 197 and a second measurement device 199. The first measurement device 197 is located at the common disposal pipe 162 and is operative for measuring the concentration of reducing agent, such as ammonia, in the removed dust leaving the hopper 130. Such measurement could be made direct, i.e., by measuring the actual concentration of ammonia in the dust, or indirect, by measuring, for example, the concentration of gaseous ammonia in the pipe 162, such concentration of gaseous ammonia providing an indirect indication of the concentration of ammonia in the removed dust. In a similar manner the second measurement device 199 is located at the common disposal pipe 172 and is operative for measuring the concentration of reducing agent, such as ammonia, in the removed dust leaving the hopper 132. Examples of per se known measurement devices that can be utilized as the measurement devices 197 and 199 include metal oxide sensors and field effect transistor sensors.

Signals indicating the respective concentrations of ammonia are sent from the two measurement devices 197, 199 to the dust handling control system196. The dust handling control system 196 compares the measured concentration of ammonia in the hopper 130, as measured by means of the measurement device 197, to a quality criterion, for example the maximum concentration for usage in cement production, indicated as MAX in Fig. 2. If the concentration of ammonia fulfils the quality criterion, then the control system 196 orders the valve 166 to open, and the valve 170 to close, such that the removed dust of the hopper 130 will be forwarded to the first collecting bin 192. If the concentration of ammonia does not fulfil the quality criterion, then the control system 196 orders the valve166 to close, and the valve 170 to open, such that the removed dust of the hopper 130 will be forwarded to the second collecting bin 194. In a similar manner the control system 196 controls, based on information from the second measurement device 199, the forwarding of the removed dust from the hopper 132 to the first or the second collecting bin 192, 194, by closing or opening the valves 176 and 180.

As indicated in Fig. 3 the dust handling control system 196 may, as an option, also receive a signal from the control system 150 of the SNCR system 142, such a signal indicating the amount of reducing agent supplied to the SNCR system 142. The dust handling control system 196 may utilize the signal from the control system 150, in a similar manner as disclosed hereinbefore with reference to Figs. 1 and 2, when one of the measurement devices 197, 199 is out of order. Another option is that the measurement devices 197, 199 measure the ammonia concentration only occasionally, such as once per three hours, wherein the dust handling control system 196 may base its control of the valves 166, 170, 176, 180 between such measurements on the signal from the control system 150. Still further, the dust handling control system 196 may also utilize the signal from the control system 150 to obtain early warnings of coming changes in the concentration of ammonia in the removed dust caused by changes in the amount of reducing agent supplied to the SNCR system 142.

It will be appreciated that numerous variants of the embodiments described above are possible within the scope of the appended claims.

Above it has been described that the dust removal device is an electrostatic precipitator 6; 106. It will be appreciated that the method and dust handling system described above can be used also for other types of dust removal devices. One example of another dust removal device is the fabric filter, an example of which is disclosed in US 4,336,035. The dust handling system and method may also be utilized in combination with other dust removal devices, such as cyclones.

Above it has been described, as an example, that a quality criterion MAX indicates the maximum allowable concentration for use of the dust material in the cement industry. It will be appreciated that other types of quality criterion may also be utilized, depending on the intended use of the dust material. Furthermore, the quality criterion may not be fixed over time. For example, if the dust material collected in the first collecting bin 92 has been well below the requirements for cement as regards the concentration of ammonia for a period of time, the dust handling control system 96 may for a period of time apply a quality criterion called, for example, MAX120, being equal to an ammonia concentration of 120% of the quality criterion MAX. In that way removed dust with a concentration of reducing agent that is higher than the quality criterion MAX of the cement industry may, for a period of time, be allowed to enter the first collecting bin 92, since the first collecting bin 92 already contains dust material having a substantially lower concentration of reducing agent, making the first dust bin 92 containing, when full, a dust material having a concentration of reducing agent which is only just below the maximum concentration for use in the cement industry. According to a still further embodiment, the quality criterion may be set, throughout the operation of the dust handling system, at MAX110, being equal to a reducing agent concentration of 110% of the quality criterion MAX for the cement industry, such a quality criterion implying that the average concentration of reducing agent in the dust bin 92 would still be below the quality criterion MAX. Hence, there are several ways of setting, or varying, the quality criterion/-s to obtain the maximum amount of dust material in the first bin 92, containing the highest quality dust material, without exceeding the requirements for, e.g., the cement industry.

Above it has been described that the dust handling system is adapted for handling the removed dust from one dust removal device, for example an electrostatic precipitator or a fabric filter, having one or several hoppers. It will be appreciated that the dust handling system may also be adapted for handling the removed dust from two or more dust removal devices, such dust removal devices being located in parallel or serial relation to each other, with respect to the flow of the process gas. The dust handling system may also be adapted for handling the removed dust from several dust removal devices being connected to different processing units.

Above it has been described that the first, second and third dust materials are collected in first, second and third collecting bins 92, 94, 95. It will be appreciated that other dust storage devices could be utilized for collecting the various dust materials. Examples of such other devices include the platform of a truck, a storage silo, a railroad car, a hardened surface on the ground, etc. Furthermore, it would also be possible to utilize more than three different dust storage devices for collecting the removed dust, for example five dust storage devices being operative for collecting removed dust of five different qualities.

Above it has been described that the processing unit generating the process gas is a combustion unit in the form of a coal fired boiler. It will be appreciated that other types of combustion units may also be utilized, such as oil fired boilers, peat fired boilers, waste incinerator units, etc. Furthermore, the processing unit may also be a processing unit in which no, or only limited, combustion occurs, the processing unit still generating a process gas containing dust particles. Examples of such non combustion processing units include blast furnaces and other devices utilized in the iron and steel industry.

Above it has been described that the respective dust handling system 60, 160 is operative for individually controlling the faith of the dust from each of the hoppers of the respective ESP 6, 106. It will be appreciated that the dust handling system may also be designed to individually control the removed dust from only some of the hoppers. For example, the dust handling system 60 may be operative for handling the dust from the first and second fields 8, 10, corresponding to the hoppers 30 and 32, of the ESP 6, while the removed dust from the third field 12, is always, without any specific control, brought from the hopper 34 to the second bin 94.

To summarize, a method of controlling the concentration of a reducing agent in a dust material being formed as a by-product in a process plant 1, which comprises a processing unit 2 and a dust removal device 6, comprises the steps of
estimating the concentration of the reducing agent in the removed dust formed in the dust removal device 6,
determining if the removed dust fulfils, with respect to its estimated concentration of reducing agent, a quality criterion,
forwarding the removed dust, if the removed dust fulfils the quality criterion, to a first dust storage device 92 to form a first dust material fulfilling said quality criterion, and
forwarding the removed dust, if the removed dust fails to fulfil the quality criterion, to a second dust storage device 94 to form a second dust material failing to fulfil said quality criterion.

## Claims

1. A method of controlling the concentration of a reducing agent in a dust material being formed as a by-product in a process plant (1), said process plant (1) comprising a processing unit (2) generating a process gas containing dust particles, a dust removal device (6) for removing at least a portion of the dust particles from the process gas to form a removed dust, and a reducing agent supply device (44, 46, 54, 59) being operative for supplying a reducing agent upstream of the dust removal device (6), as seen with respect to the flow direction of the process gas, **characterized in**
estimating the concentration of the reducing agent in the removed dust formed in the dust removal device (6),
determining if the removed dust fulfils, with respect to its estimated concentration of the reducing agent, a quality criterion,
forwarding the removed dust, if the removed dust fulfils the quality criterion, to a first dust storage device (92) to form a first dust material fulfilling the quality criterion, and
forwarding the removed dust, if the removed dust fails to fulfil the quality criterion, to a second dust storage device (94) to form a second dust material failing to fulfil the quality criterion.

2. A method according to claim 1, wherein said step of estimating the concentration of the reducing agent in the removed dust formed in the dust removal device (6) comprises measuring the amount of reducing agent supplied upstream of the dust removal device (6) by means of the reducing agent supply device (44, 46, 54, 59) and utilizing a correlation between the amount of reducing agent supplied by means of the reducing agent supply device (44, 46, 54, 59) and the concentration of reducing agent in the removed dust formed in the dust removal device (6).

3. A method according to any one of claims 1-2, wherein said step of estimating the concentration of the reducing agent in the removed dust formed in the dust removal device (106) comprises measuring, directly or indirectly, the concentration of reducing agent in the removed dust formed in the dust removal device (106).

4. A method according to any one of the preceding claims, wherein the dust removal device is an electrostatic precipitator (6) having at least two fields (8, 10, 12) in series, as seen with respect to the flow direction of the process gas, each of the at least two fields (8, 10, 12) being provided with at least one separate hopper (30, 32, 34) collecting the removed dust of the respective field (8, 10, 12), said step of estimating the concentration of the reducing agent in the removed dust formed in the dust removal device (6) comprising estimating individually for each field (8, 10, 12) the concentration of the reducing agent in the removed dust.

5. A method according to claim 4, further comprising determining, individually for each field (8, 10, 12), if the removed dust of each field fulfils, with respect to its estimated concentration of reducing agent, the quality criterion, forwarding the removed dust from each individual field (8, 10, 12), if the removed dust fulfils the quality criterion, to the first dust storage device (92) to form the first dust material fulfilling the quality criterion, and forwarding the removed dust from each individual field (8, 10, 12), if the removed dust fails to fulfil the quality criterion, to the second dust storage device (94) to form the second dust material failing to fulfil the quality criterion.

6. A method according to any one of the preceding claims, wherein said step of determining if the removed dust fulfils, with respect to its estimated concentration of the reducing agent, a quality criterion, comprises determining if the removed dust fulfils said quality criterion, being a first quality criterion (MAX), and a further quality criterion, being a second quality criterion (LIM), the second quality criterion (LIM) defining a lower quality with respect to the concentration of the reducing agent than the first quality criterion, said method further comprising forwarding the removed dust, if the removed dust fulfils the first quality criterion, to the first dust storage device (92) to form the first dust material fulfilling the first quality criterion, forwarding the removed dust, if the removed dust fails to fulfil the first quality criterion but fulfils the second quality criterion, to the second dust storage device (94) to form the second dust material fulfilling the second quality criterion, and forwarding the removed dust, if the removed dust fails to fulfil the second quality criterion, to a third dust storage device (95) to form a third dust material failing to fulfil the second quality criterion.

7. A dust handling system for controlling the concentration of a reducing agent in a dust material being formed as a by-product in a process plant (1), the process plant (1) comprising a processing unit (2) generating a process gas containing dust particles, a dust removal device (6) for removing at least a portion of the dust particles from the process gas to form a removed dust, and a reducing agent supply device (44, 46, 54, 59) being operative for supplying a reducing agent upstream of the dust removal device (6), as seen with respect to the flow direction of the process gas, **characterized in** the dust handling system (60) comprising a control system (96) being operative for estimating the concentration of the reducing agent in the removed dust formed in the dust removal device (6), and for determining if the removed dust fulfils, with respect to its estimated concentration of reducing agent, a quality criterion, and a dust transport system (62, 64, 66, 68, 70) being operative for forwarding the removed dust, if the removed dust fulfils the quality criterion, to a first dust storage device (92) to form a first dust material fulfilling the quality criterion, and for forwarding the removed dust, if the removed dust fails to fulfil the quality criterion, to a second dust storage device (94) to form a second dust material failing to fulfil the quality criterion.

8. A dust handling system according to claim 7, wherein the control system (96) is operative for receiving a signal indicating the amount of reducing agent supplied upstream of the dust removal device (6) by means of the reducing agent supply device (44, 46, 54, 59) and for estimating the concentration of the reducing agent in the removed dust formed in the dust removal device (6) utilizing a correlation between the amount of reducing agent supplied by means of the reducing agent supply device (44, 46, 54, 59) and the concentration of the reducing agent in the removed dust formed in the dust removal device (6).

9. A dust handling system according to any one of claims 7-8, wherein the dust handling system (160) comprises at least one measurement device (197, 199) being operative for measuring, directly or indirectly, the concentration of the reducing agent in the removed dust formed in the dust removal device (106).

10. A dust handling system according to any one of claims 7-9, the dust handling system (60) being adapted for handling dust from a dust removal device (6) comprising at least two separate hoppers (30, 32, 34) collecting the dust particles removed from the process gas and forming two separate removed dusts, the dust handling system (60) comprising separate transport devices (64, 68, 74, 78, 84, 88) leading from each of the at least two separate hoppers (30, 32, 34) to each of the first and second dust storage devices (92, 94).

11. A dust handling system according to claim 10, wherein the control system (96) of the dust handling system (60) is operative for controlling, individually for each hopper (30, 32, 34), and in view of the quality criterion, to which of the first and second dust storage devices (92, 94) the removed dust from each of the at least two hoppers (30, 32, 34) should be forwarded.

## Patentansprüche

1. Verfahren zum Steuern der Konzentration eines Reduktionsmittels in einem Staubmaterial, das als ein Nebenprodukt in einer verfahrenstechnischen Anlage (1) hergestellt wird, wobei die verfahrenstechnische Anlage (1) eine Verarbeitungseinheit (2), die ein Prozessgas, das Staubpartikel enthält, erzeugt, eine Staubentfernungsvorrichtung (6) zum Entfernen mindestens eines Teils der Staubpartikel aus dem Prozessgas, um entfernten Staub zu bilden, und eine Reduktionsmittelversorgungsvorrichtung (44, 46, 54, 59), die betreibbar ist, um ein Reduktionsmittel bezogen auf die Strömungsrichtung des Prozessgases zustromseitig von der Staubentfernungsvorrichtung (6) einzuspeisen, umfasst und wobei das Verfahren **gekennzeichnet ist durch**:
Schätzen der Reduktionsmittelkonzentration in dem entfernten Staub, der in der Staubentfernungsvorrichtung (6) gebildet wird,
Bestimmen, ob der entfernte Staub in Bezug auf seine geschätzte Reduktionsmittelkonzentration ein Qualitätskriterium erfüllt,
Weiterleiten des entfernten Staubs an eine erste Staubspeichervorrichtung (92), wenn der entfernte Staub das Qualitätskriterium erfüllt, um ein erstes Staubmaterial, das das Qualitätskriterium erfüllt, herzustellen, und
Weiterleiten des entfernten Staubs an eine zweite Staubspeichervorrichtung (94), wenn der entfernte Staub das Qualitätskriterium nicht erfüllt, um ein zweites Staubmaterial, das das Qualitätskriterium nicht erfüllt, herzustellen.

2. Verfahren nach Anspruch 1, wobei der Schritt des Schätzens der Reduktionsmittelkonzentration in dem entfernten Staub, der in der Staubentfernungsvorrichtung (6) gebildet wird, ein Messen der Reduktionsmittelmenge, die vor der Staubentfernungsvorrichtung (6) mittels der Reduktionsmittelversorgungsvorrichtung (44, 46, 54, 59) eingespeist wird, und ein Verwenden einer Korrelation zwischen der Reduktionsmittelmenge, die mittels der Reduktionsmittelversorgungsvorrichtung (44, 46, 54, 59) eingespeist wird, und der Reduktionsmittelkonzentration in dem entfernten Staub, der in der Staubentfernungsvorrichtung (6) gebildet wird, umfasst.

3. Verfahren nach einem der Ansprüche 1-2, wobei der Schritt des Schätzens der Reduktionsmittelkonzentration in dem entfernten Staub, der in der Staubentfernungsvorrichtung (106) gebildet wird, ein direktes oder indirektes Messen der Reduktionsmittelkonzentration in dem entfernten Staub, der in der Staubentfernungsvorrichtung (106) gebildet wird, umfasst.

4. Verfahren nach einem der vorhergehenden Ansprüche, wobei die Staubentfernungsvorrichtung ein elektrostatischer Abscheider (6) ist, der mindestens zwei Felder (8, 10, 12), die in Bezug auf die Strömungsrichtung des Gases in Reihe geschaltet sind, besitzt, wobei jedes der mindestens zwei Felder (8, 10, 12) mit mindestens einem separaten Trichter (30, 32, 34), der den entfernten Staub des jeweiligen Felds (8, 10, 12) sammelt, versehen ist, und wobei der Schritt des Schätzens der Reduktionsmittelkonzentration in dem entfernten Staub, der in der Staubentfernungsvorrichtung (6) gebildet wird, ein individuelles Schätzen der Reduktionsmittelkonzentration in dem entfernten Staub für jedes Feld (8, 10, 12) umfasst.

5. Verfahren nach Anspruch 4, das ferner Folgendes umfasst: individuelles Bestimmen für jedes Feld (8, 10, 12), ob der entfernte Staub von jedem Feld in Bezug auf die Reduktionsmittelkonzentration das Qualitätskriterium erfüllt, Weiterleiten des entfernten Staubs von jedem individuellen Feld (8, 10, 12) an eine erste Staubspeichervorrichtung (92), wenn der entfernte Staub das Qualitätskriterium erfüllt, um ein erstes Staubmaterial, das das Qualitätskriterium erfüllt, herzustellen, und Weiterleiten des entfernten Staubs von jedem individuellen Feld (8, 10, 12) an eine zweite Staubspeichervorrichtung (94), wenn der entfernte Staub das Qualitätskriterium nicht erfüllt, um ein zweites Staubmaterial, das das Qualitätskriterium nicht erfüllt, herzustellen.

6. Verfahren nach einem der vorhergehenden Ansprüche, wobei der Schritt des Bestimmens, ob der entfernte Staub in Bezug auf seine geschätzte Reduktionsmittelkonzentration ein Qualitätskriterium erfüllt, ein Bestimmen umfasst, ob der entfernte Staub das Qualitätskriterium, das ein erstes Qualitätskriterium (MAX) ist, und ein weiteres Qualitätskriterium, das ein zweites Qualitätskriterium (LIM) ist, erfüllt, wobei das zweite Qualitätskriterium (LIM) eine niedrigere Qualität in Bezug auf die Reduktionsmittelkonzentration definiert als das erste Qualitätskriterium, und wobei das Verfahren ferner Folgendes umfasst: Weiterleiten des entfernten Staubs an eine erste Staubspeichervorrichtung (92), wenn der entfernte Staub das erste Qualitätskriterium erfüllt, um ein erstes Staubmaterial, das das Qualitätskriterium erfüllt, herzustellen, Weiterleiten des entfernten Staubs an eine zweite Staubspeichervorrichtung (94), wenn der entfernte Staub das erste Qualitätskriterium nicht erfüllt, aber das zweite Qualitätskriterium erfüllt, um ein zweites Staubmaterial, das das zweite Qualitätskriterium erfüllt, herzustellen, und Weiterleiten des entfernten Staubs an eine dritte Staubspeichervorrichtung (95), wenn der entfernte Staub das zweite Qualitätskriterium nicht erfüllt, um ein drittes Staubmaterial, das das zweite Qualitätskriterium nicht erfüllt, herzustellen.

7. Staubbehandlungssystem zum Steuern der Reduktionsmittelkonzentration in einem Staubmaterial, das als ein Nebenprodukt in einer verfahrenstechnischen Anlage (1) hergestellt wird, wobei die verfahrenstechnische Anlage (1) eine Verarbeitungseinheit (2), die ein Prozessgas, das Staubpartikel enthält, erzeugt, eine Staubentfernungsvorrichtung (6) zum Entfernen mindestens eines Teils der Staubpartikel aus dem Prozessgas, um entfernten Staub zu bilden, und eine Reduktionsmittelversorgungsvorrichtung (44, 46, 54, 59), die betreibbar ist, um ein Reduktionsmittel in Bezug auf die Strömungsrichtung des Prozessgases gesehen zustromseitig von der Staubentfernungsvorrichtung (6) einzuspeisen, umfasst und wobei das Staubbehandlungssystem (60) **dadurch gekennzeichnet ist, dass** es ein Steuersystem (96), das betreibbar ist, um die Reduktionsmittelkonzentration in dem entfernten Staub, der in der Staubentfernungsvorrichtung (6) gebildet wird, zu schätzen und zu bestimmen, ob der entfernte Staub in Bezug auf seine geschätzte Reduktionsmittelkonzentration ein Qualitätskriterium erfüllt, und ein Staubtransportsystem (62, 64, 66, 68, 70) umfasst, das betreibbar ist, um den entfernten Staub an eine erste Staubspeichervorrichtung (92) weiterzuleiten, wenn der entfernte Staub das Qualitätskriterium erfüllt, um ein erstes Staubmaterial, das das Qualitätskriterium erfüllt, herzustellen, und den entfernten Staub an eine zweite Staubspeichervorrichtung (94) weiterzuleiten, wenn der entfernte Staub das Qualitätskriterium nicht erfüllt, um ein zweites Staubmaterial, das das Qualitätskriterium nicht erfüllt, herzustellen.

8. Staubbehandlungssystem nach Anspruch 7, wobei das Steuersystem (96) betreibbar ist, um ein Signal, das die Reduktionsmittelmenge, die zustromseitig von der Staubentfernungsvorrichtung (6) mittels der Reduktionsmittelversorgungsvorrichtung (44, 46, 54, 59) eingespeist wird, anzeigt, zu empfangen und die Reduktionsmittelkonzentration in dem entfernten Staub, der in der Staubentfernungsvorrichtung (6) gebildet wird, unter Verwendung einer Korrelation zwischen der Reduktionsmittelmenge, die mittels der Reduktionsmittelversorgungsvorrichtung (44, 46, 54, 59) eingespeist wird, und der Reduktionsmittelkonzentration in dem entfernten Staub, der in der Staubentfernungsvorrichtung (6) gebildet wird, zu schätzen.

9. Staubbehandlungssystem nach einem der Ansprüche 7-8, wobei das Staubbehandlungssystem (160) mindestens eine Messvorrichtung (197, 199) umfasst, die betreibbar ist, um die Reduktionsmittelkonzentration in dem entfernten Staub, der in der Staubentfernungsvorrichtung (106) gebildet wird, direkt oder indirekt zu messen.

10. Staubbehandlungssystem nach einem der Ansprüche 7-9, wobei das Staubbehandlungssystem (60) dazu ausgelegt ist, Staub aus einer Staubentfernungsvorrichtung (6), die mindestens zwei separate Trichter (30, 32, 34), die die aus dem Prozessgas entfernten Staubpartikel sammeln, umfasst und zwei separate entfernte Stäube herstellt, zu behandeln, und wobei das Staubbehandlungssystem (60) separate Staubtransportsysteme (64, 68, 74, 78, 84, 88) umfasst, die von jedem der mindestens zwei separaten Trichter (30, 32, 34) sowohl zu der ersten als auch zu der zweiten Staubspeichervorrichtung (92, 94) führen.

11. Staubbehandlungssystem nach Anspruch 10, wobei das Steuersystem (96) des Staubbehandlungssystems (60) betreibbar ist, um individuell für jeden Trichter (30, 32, 34) und mit Hinblick auf das Qualitätskriterium zu steuern, zu welcher der ersten und der zweiten Staubspeichervorrichtung (92, 94) der entfernte Staub aus jedem der mindestens zwei Trichter (30, 32, 34) weitergeleitet werden soll.

## Revendications

1. Procédé de contrôle de la concentration en agent réducteur dans un matériau de poussière formé en tant que produit secondaire dans une installation de traitement (1), ladite installation de traitement (1) comprenant une unité de traitement (2) générant un gaz de processus contenant des particules de poussière, un dispositif d'élimination de poussière (6) destiné à éliminer au moins une partie des particules de poussière du gaz de processus pour former une poussière éliminée, et un dispositif d'alimentation en agent réducteur (44, 46, 54, 59) servant à fournir un agent réducteur en amont du dispositif d'élimination de poussière (6), considéré par rapport au sens d'écoulement du gaz de processus, **caractérisé par**
l'estimation de la concentration en agent réducteur dans la poussière éliminée formée dans le dispositif d'élimination de poussière (6), l'étape consistant à déterminer si la poussière éliminée satisfait, par rapport à sa concentration estimée en agent réducteur, à un critère de qualité,
le transport de la poussière éliminée, si la poussière éliminée satisfait au critère de qualité, jusqu'à un premier dispositif de stockage de poussière (92) pour former un premier matériau de poussière satisfaisant au critère de qualité, et
le transport de la poussière éliminée, si la poussière éliminée ne satisfait pas au critère de qualité, jusqu'à un deuxième dispositif de stockage de poussière (94) pour former un deuxième matériau de poussière ne satisfaisant pas au critère de qualité.

2. Procédé selon la revendication 1, dans lequel ladite étape d'estimation de la concentration en agent réducteur dans la poussière éliminée formée dans le dispositif d'élimination de poussière (6) comprend la mesure d'une quantité d'agent réducteur fourni en amont du dispositif d'élimination de poussière (6) au moyen du dispositif d'alimentation en agent réducteur (44, 46, 54, 59) et l'utilisation d'une corrélation entre la quantité d'agent réducteur fourni au moyen du dispositif d'alimentation en agent réducteur (44, 46, 54, 59) et la concentration en agent réducteur dans la poussière éliminée formée dans le dispositif d'élimination de poussière (6).

3. Procédé selon l'une quelconque des revendications 1 et 2, dans lequel ladite étape d'estimation de la concentration en agent réducteur dans la poussière éliminée formée dans le dispositif d'élimination de poussière (106) comprend la mesure, directement ou indirectement, de la concentration en agent réducteur dans la poussière éliminée formée dans le dispositif d'élimination de poussière (106).

4. Procédé selon l'une quelconque des revendications précédentes, dans lequel le dispositif d'élimination de poussière est un précipité électrostatique (6) ayant au moins deux champs (8, 10, 12) en série, considéré par rapport au sens d'écoulement du gaz de processus, chacun des au moins deux champs (8, 10, 12) étant pourvu d'au moins une trémie séparée (30, 32, 34) recueillant la poussière éliminée du champ respectif (8, 10, 12), ladite étape d'estimation de la concentration en agent réducteur dans la poussière éliminée formée dans le dispositif d'élimination de poussière (6) comprenant l'estimation individuellement pour chaque champ (8, 10, 12) de la concentration en agent réducteur dans la poussière éliminée.

5. Procédé selon la revendication 4, comprenant en outre l'étape consistant à déterminer, individuellement pour chaque champ (8, 10, 12), si la poussière éliminée de chaque champ satisfait, par rapport à sa concentration estimée en agent réducteur, au critère de qualité, le transport de la poussière éliminée depuis chaque champ individuel (8, 10, 12), si la poussière éliminée satisfait au critère de qualité, jusqu'au premier dispositif de stockage de poussière (92) pour former le premier matériau de poussière satisfaisant au critère de qualité, et le transport de la poussière éliminée depuis chaque champ individuel (8, 10, 12), si la poussière éliminée ne satisfait pas au critère de qualité, jusqu'au deuxième dispositif de stockage de poussière (94) pour former le deuxième matériau de poussière ne satisfaisant pas au critère de qualité.

6. Procédé selon l'une quelconque des revendications précédentes, dans lequel ladite étape consistant à déterminer si la poussière éliminée satisfait, par rapport à sa concentration estimée en agent réducteur, à un critère de qualité, comprend l'étape consistant à déterminer si la poussière éliminée satisfait audit critère de qualité, étant un premier critère de qualité (MAX), et à un critère de qualité supplémentaire, étant un deuxième critère de qualité (LIM), le deuxième critère de qualité (LIM) définissant une qualité inférieure au premier critère de qualité par rapport à la concentration en agent réducteur, ledit procédé comprenant en outre le transport de la poussière éliminée, si la poussière éliminée satisfait au premier critère de qualité, jusqu'au premier dispositif de stockage de poussière (92) pour former le premier matériau de poussière satisfaisant au premier critère de qualité, le transport de la poussière éliminée, si la poussière éliminée ne satisfait pas au premier critère de qualité mais satisfait au deuxième critère de qualité, jusqu'au deuxième dispositif de stockage de poussière (94) pour former le deuxième matériau de poussière satisfaisant au deuxième critère de qualité, et le transport de la poussière éliminée, si la poussière éliminée ne satisfait pas au deuxième critère de qualité, jusqu'à un troisième dispositif de stockage de poussière (95) pour former un troisième matériau de poussière ne satisfaisant pas au deuxième critère de qualité.

7. Système de traitement de poussière pour contrôler la concentration en agent réducteur dans un matériau de poussière formé en tant que produit secondaire dans une installation de traitement (1), l'installation de traitement (1) comprenant une unité de traitement (2) générant un gaz de processus contenant des particules de poussière, un dispositif d'élimination de poussière (6) destiné à éliminer au moins une partie des particules de poussière du gaz de processus pour former une poussière éliminée, et un dispositif d'alimentation en agent réducteur (44, 46, 54, 59) servant à fournir un agent réducteur en amont du dispositif d'élimination de poussière (6), considéré par rapport au sens d'écoulement du gaz de processus, **caractérisé en ce que** le système de traitement de poussière (60) comprend un système de contrôle (96) servant à estimer la concentration en agent réducteur dans la poussière éliminée formée dans le dispositif d'élimination de poussière (6), et à déterminer si la poussière éliminée satisfait, par rapport à sa concentration estimée en agent réducteur, à un critère de qualité, et un système de transport de poussière (62, 64, 66, 68, 70) servant à transporter la poussière éliminée, si la poussière éliminée satisfait au critère de qualité, jusqu'à un premier dispositif de stockage de poussière (92) pour former un premier matériau de poussière satisfaisant au critère de qualité, et à transporter la poussière éliminée, si la poussière éliminée ne satisfait pas au critère de qualité, jusqu'à un deuxième dispositif de stockage de poussière (94) pour former un deuxième matériau de poussière ne satisfaisant pas au critère de qualité.

8. Système de traitement de poussière selon la revendication 7, dans lequel le système de contrôle (96) sert à recevoir un signal indiquant la quantité d'agent réducteur fourni en amont du dispositif d'élimination de poussière (6) au moyen du dispositif d'alimentation en agent réducteur (44, 46, 54, 59) et à estimer la concentration en agent réducteur dans la poussière éliminée formée dans le dispositif d'élimination de poussière (6) en utilisant une corrélation entre la quantité d'agent réducteur fourni au moyen du dispositif d'alimentation en agent réducteur (44, 46, 54, 59) et la concentration en agent réducteur dans la poussière éliminée formée dans le dispositif d'élimination de poussière (6).

9. Système de traitement de poussière selon l'une quelconque des revendications 7 et 8, dans lequel le système de traitement de poussière (160) comprend au moins un dispositif de mesure (197, 199) servant à mesurer, directement ou indirectement, la concentration en agent réducteur dans la poussière éliminée formée dans le dispositif d'élimination de poussière (106).

10. Système de traitement de poussière selon l'une quelconque des revendications 7 à 9, le système de traitement de poussière (60) étant prévu pour traiter la poussière provenant d'un dispositif d'élimination de poussière (6) comprenant au moins deux trémies séparées (30, 32, 34) recueillant les particules de poussière éliminées du gaz de processus et formant deux poussières éliminées séparées, le système de traitement de poussière (60) comprenant des dispositifs de transport séparés (64, 68, 74, 78, 84, 88) conduisant depuis chacune des au moins deux trémies séparées (30, 32, 34) jusqu'à chacun des premier et deuxième dispositifs de stockage de poussière (92, 94).

11. Système de traitement de poussière selon la revendication 10, dans lequel le système de contrôle (96) du système de traitement de poussière (60) sert à contrôler, individuellement pour chaque trémie (30, 32, 34), et en considération du critère de qualité, auquel des premier et deuxième dispositifs de stockage de poussière (92, 94) la poussière éliminée de chacune des au moins deux trémies (30, 32, 34) devrait être transportée.
